(19) Europäisches Patentamt European Patent Office Office européen des brevets

(11) **EP 4 712 668 A1**

(12) **EUROPEAN PATENT APPLICATION**
published in accordance with Art. 153(4) EPC

(43) Date of publication:
**18.03.2026 Bulletin 2026/12**

(21) Application number: **24802946.4**

(22) Date of filing: **07.05.2024**

(51) International Patent Classification (IPC):
**H04W 74/08** (2024.01)

(52) Cooperative Patent Classification (CPC):
**H04W 52/36; H04W 74/00; H04W 74/08;
H04W 74/0833**

(86) International application number:
**PCT/CN2024/091323**

(87) International publication number:
**WO 2024/230664 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.05.2023 CN 202310521714**

(71) Applicant: **Vivo Mobile Communication Co., Ltd.
Dongguan, Guangdong 523863 (CN)**

(72) Inventors:
• **WANG, Chengrui
Dongguan, Guangdong 523863 (CN)**
• **LIN, Zhipeng
Dongguan, Guangdong 523863 (CN)**
• **YANG, Kun
Dongguan, Guangdong 523863 (CN)**
• **MO, Yitao
Dongguan, Guangdong 523863 (CN)**

(74) Representative: **Walaski, Jan Filip et al
Venner Shipley LLP
200 Aldersgate
London EC1A 4HD (GB)**

(54) **PRACH SIGNAL SENDING METHOD AND APPARATUS, AND TERMINAL**

(57) Embodiments of the present application relate to the technical field of communications, and disclose a PRACH signal sending method and apparatus, and a terminal. The PRACH signal sending method in the embodiments of the present application comprises: a terminal determining a parameter for PRACH transmission, the parameter comprising at least one of the following: power of single transmission of PRACH signals and a PRACH resource set; and sending the PRACH signals on the basis of the parameter, wherein the PRACH transmission involves a plurality of PRACH signals.

200

Determine, by a terminal, parameters of PRACH transmission, the parameters including at least one of the following: transmission power of a single PRACH signal and a PRACH resource set — S202

Transmit, based on the parameters, the PRACH signal, the PRACH transmission including a plurality of PRACH signals — S204

**FIG. 2**

**Description**

**CROSS-REFERENCE TO RELATED APPLICATIONS**

This application claims priority to Chinese Patent Application No. 2023105217146, entitled "PRACH SIGNAL TRANSMISSION METHOD AND APPARATUS, AND TERMINAL" filed on May 9, 2023, which is incorporated herein by reference in its entirety.

**TECHNICAL FIELD**

The present application relates to the field of communication technology, and particularly, to a physical random access channel (PRACH) signal transmission method and apparatus, and a terminal.

**BACKGROUND**

To enhance PRACH coverage, the related technology proposes introducing PRACH repetition transmission. In PRACH repetition, a single RACH attempt may include a plurality of PRACH signals. However, how to transmit the plurality of PRACH signals has not been determined. Therefore, how to transmit PRACH signals in a case that a terminal supports PRACH repetition transmission has become an urgent problem to be addressed.

**SUMMARY**

Embodiments of the present application provide a PRACH signal transmission method and apparatus, and a terminal, capable of addressing the problem of communication system performance being affected due to the inability to determine how to transmit the PRACH signal.

According to a first aspect, there is provided a PRACH signal transmission method, including: determining, by a terminal, parameters of PRACH transmission, the parameters including at least one of the following: transmission power of a single PRACH signal and a PRACH resource set; and transmitting, based on the parameters, the PRACH signal, the PRACH transmission including a plurality of PRACH signals.

According to a second aspect, there is provided a PRACH signal transmission apparatus, including: a determination module, configured to determine, by a terminal, parameters of PRACH transmission, the parameters including at least one of the following: transmission power of a single PRACH signal and a PRACH resource set; and a transmission module, configured to transmit, based on the parameters, the PRACH signal, the PRACH transmission including a plurality of PRACH signals.

According to a third aspect, there is provided a terminal, including a processor and a memory storing programs or instructions executable by the processor, the programs or instructions, when executed by the processor, cause the processor to perform steps of the method according to the first aspect.

According to a fourth aspect, there is provided a terminal, including a processor and a communication interface, where the processor is configured to determine parameters of PRACH transmission, the parameters including at least one of the following: transmission power of a single PRACH signal and a PRACH resource set; and the communication interface is configured to transmit, based on the parameters, the PRACH signal, the PRACH transmission including a plurality of PRACH signals.

According to a fifth aspect, there is provided a readable storage medium having programs or instructions stored therein, the programs or instructions, when executed by a processor, cause the processor to perform steps of the method according to the first aspect.

According to a sixth aspect, there is provided a wireless communication system including a terminal and a network-side device, the terminal being configured to perform steps of the method according to the first aspect.

According to a seventh aspect, there is provided a chip. The chip includes a processor and a communication interface. The communication interface is coupled to the processor. The processor is configured to run a program or an instruction to implement the steps of the method according to the first aspect.

According to an eighth aspect, there is provided a computer program/program product. The computer program/program product is stored in a storage medium, and the computer program/program product is executed by at least one processor to implement the steps of the method according to the first aspect.

In the embodiments of the present application, in a case that the PRACH transmission includes a plurality of PRACH signals, that is, the terminal supports PRACH repetition transmission, the terminal may determine parameters of the PRACH transmission, the parameters including at least one of the following: transmission power of a single PRACH signal and a PRACH resource set. The terminal may further transmit, based on the parameters, the PRACH signals, thereby enabling effective transmission of the plurality of PRACH signals in PRACH repetition transmission and enhancing the performance of the communication system.

## BRIEF DESCRIPTION OF THE DRAWINGS

FIG. 1 is a schematic diagram of a wireless communication system according to an embodiment of the present application;

FIG. 2 is a schematic flowchart of a PRACH signal transmission method according to an embodiment of the present application;

FIG. 3 is a schematic diagram of a specific application of a PRACH signal transmission method according to an embodiment of the present application;

FIG. 4 is a schematic diagram of a specific application of a PRACH signal transmission method according to an embodiment of the present application;

FIG. 5 is a schematic diagram of a specific application of a PRACH signal transmission method according to an embodiment of the present application;

FIG. 6 is a schematic diagram of a specific application of a PRACH signal transmission method according to an embodiment of the present application;

FIG. 7 is a schematic diagram of a specific application of a PRACH signal transmission method according to an embodiment of the present application;

FIG. 8 is a schematic diagram of a specific application of a PRACH signal transmission method according to an embodiment of the present application;

FIG. 9 is a schematic diagram of a specific application of a PRACH signal transmission method according to an embodiment of the present application;

FIG. 10 is a schematic diagram of a specific application of a PRACH signal transmission method according to an embodiment of the present application;

FIG. 11 is a schematic diagram of a specific application of a PRACH signal transmission method according to an embodiment of the present application;

FIG. 12 is a schematic diagram of a specific application of a PRACH signal transmission method according to an embodiment of the present application;

FIG. 13 is a schematic diagram of a specific application of a PRACH signal transmission method according to an embodiment of the present application;

FIG. 14 is a schematic structural diagram of a PRACH signal transmission apparatus according to an embodiment of the present application;

FIG. 15 is a schematic structural diagram of a communication device according to an embodiment of the present application; and

FIG. 16 is a schematic structural diagram of a terminal according to an embodiment of the present application.

## DETAILED DESCRIPTION

Technical solutions in embodiments of the present application are clearly described below with reference to the drawings in the embodiments of the present application. The described embodiments are merely part of rather than all of the embodiments of the present application. All other embodiments obtained by a person of ordinary skill in the art based on the embodiments of the present application fall within the scope of protection of the present application.

The terms "first", "second", and the like in the present application are used to distinguish similar objects and are not intended to indicate any specific order or sequence. It is to be understood that such terms used herein are interchangeable as appropriate, so that the embodiments of the present application can be implemented in sequences other than those illustrated or described herein. The objects distinguished by "first", "second", and the like are generally of the same type and are not limited in number, for example, a first object may be a single object or a plurality of objects. In addition, the term "or" in the present application indicates at least one of the connected objects. For example, "A or B" encompasses three scenarios: scenario one: including A but not B; scenario two: including B but not A; and scenario three: including both A and B. The character "/" generally indicates an "or" relationship between the objects preceding and following it.

The term "indicate" in the present application may refer to either a direct indication (i.e., an explicit indication) or an indirect indication (i.e., an implicit indication). The direct indication can be understood as a sender explicitly informing a receiver of specific information, operations to be performed, requested results, or the like in the transmitted indication. The indirect indication can be understood as the receiver determining, according to the indication sent by the sender, the corresponding information, or making a determination and determining, based on the determination, the operations to be performed or the requested results.

It is noted that the technology described in the embodiments of the present application is not limited to long term evolution (Long Term Evolution, LTE) or LTE-advanced (LTE-Advanced, LTE-A) systems, and may be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or other systems. The terms "system" and "network" in the embodiments of the present application are often used interchangeably. The described technology can be applied not only to the systems and radio technologies mentioned above, but also to other systems and radio technologies. The following description illustrates a new radio (New Radio, NR) system for exemplary purposes, and NR terminology is used in most of the subsequent description. However, these technologies may be applied to systems other than NR systems, such as 6th generation (6th Generation, 6G) communication systems.

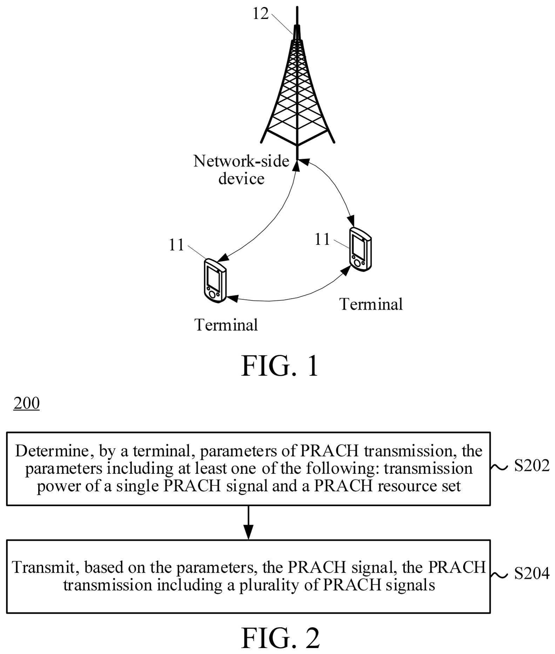

FIG. 1 shows a block diagram of a wireless communication system to which an embodiment of the present application may be applied. The wireless communication system includes a terminal 11 and a network-side device 12. The terminal 11 may be a terminal-side device, such as a mobile phone, tablet personal computer (Tablet Personal Computer), laptop computer (Laptop Computer), notebook computer, personal digital assistant (Personal Digital Assistant, PDA), handheld computer, netbook, ultra-mobile personal computer (Ultra-mobile Personal Computer, UMPC), mobile Internet device (Mobile Internet Device, MID), augmented reality (Augmented Reality, AR) device, virtual reality (Virtual Reality, VR) device, robot, wearable device (Wearable Device), flight vehicle (Flight Vehicle), vehicle user equipment (Vehicle User Equipment, VUE), shipborne device, pedestrian user equipment (Pedestrian User Equipment, PUE), smart home device (home equipment with wireless communication capabilities, such as a refrigerator, television, washing machine, or furniture), game console, personal computer (Personal Computer, PC), Automated Teller Machine, or self-service terminal. The wearable devices include smart watches, smart wristbands, smart earphones, smart glasses, smart jewelry (such as smart bracelets, smart bangles, smart rings, smart necklaces, smart anklets, and smart foot chains), smart bands, smart clothing, and the like. The vehicle user equipment may be referred to as a vehicle terminal, vehicle controller, vehicle module, vehicle component, vehicle chip, vehicle unit, or the like. It is to be noted that the embodiments of the present application do not limit the specific type of the terminal 11. The network-side device 12 may include an access network device or a core network device, where the access network device may be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as node B (Node B, NB), evolved node B (Evolved Node B, eNB), the next generation node B (the Next Generation Node B, gNB), new radio node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home node B (Home Node B, HNB), home evolved node B (Home Evolved Node B), transmission reception point (Transmission Reception Point, TRP), or any other suitable term in the field, provided the same technical effect is achieved. The base station is not limited to a specific technical term. It is to be noted that, in the embodiments of the present application, the base station in an NR system is used merely as an example for illustration, and the specific type of the base station is not limited.

The PRACH signal transmission method provided in the embodiments of the present application is described in detail below with reference to the drawings, through some embodiments and the application scenarios.

As shown in FIG. 2, the embodiments of the present application provide a PRACH signal transmission method 200, which can be performed by a terminal. In other words, the method can be executed by software or hardware mounted on the terminal, and the method includes the following steps.

S202: A terminal determines parameters of PRACH transmission, the parameters including at least one of the following: transmission power of a single PRACH signal and a PRACH resource set.

This embodiment supports PRACH repetition transmission (or simply PRACH transmission). The PRACH transmission may include a plurality of PRACH signals, that is, a single RACH attempt may include a plurality of PRACH signal transmissions.

In this step, the terminal may specifically determine parameters of the PRACH transmission based on path loss measurement results and the like. The parameters include at least one of the following: transmission power of a single PRACH signal and a PRACH resource set, where the PRACH resource set may include a preamble resource set and the like.

Optionally, in this step, determining, by a terminal, transmission power of a single PRACH signal of PRACH transmission includes: determining, by the terminal, first power control-related parameters, the first power control-related parameters including at least one of the following: an initial target received power (preambleReceivedTargetPower), a power ramping step (powerRampingStep), and a value of a power ramping counter; and determining, based on the first power control-related parameters, the transmission power of the single PRACH signal of the PRACH transmission.

In this embodiment, determining, by the terminal based on the first power control-related parameters, the transmission power of the single PRACH signal of the PRACH transmission includes: determining, based on the first power control-related parameters, a target received power of each PRACH signal; and determining, based on the target received power of each PRACH signal, a transmit power of each PRACH signal. Since the PRACH transmission includes a plurality of PRACH signals, the term "transmit power of each PRACH signal" herein refers to the transmission power of the single PRACH signal.

For the transmission power of the single PRACH signal, this embodiment may further define an initial target received power and a power ramping step. For example, the first power control-related parameters may be determined based on a single RACH attempt or based on a single PRACH signal transmitted in the RACH attempt.

In one example, the first power control-related parameters are determined based on one PRACH signal, where the initial target received power is an initial target received power of each PRACH signal in a single RACH attempt, and the initial target received power may be configured or indicated by the network-side device. The power ramping step is a power ramping step of one PRACH signal in the RACH attempt relative to one PRACH signal in a last RACH attempt. A detailed description of this example is provided in Embodiment 1 hereinafter.

In another example, the first power control-related parameters are determined based on a single RACH attempt, where the initial target received power is a total initial target received power of the plurality of PRACH signals in the RACH attempt, and the total initial target received power may be configured or indicated by the network-side device. The power ramping step is a ramping step between a total target received power of the RACH attempt and a total target received power of a last RACH attempt, the RACH attempt including a plurality of PRACH signals. A detailed description of this example is provided in Embodiment 2 hereinafter.

For the total initial target received power of the plurality of PRACH signals in a single RACH attempt, as mentioned in this example, the term "the plurality of PRACH signals" may refer to all PRACH signals in the RACH attempt, or to the PRACH signals included in a single PRACH detection in the RACH attempt.

S204: Transmit, based on the parameters, the PRACH signal, the PRACH transmission including a plurality of PRACH signals.

In the PRACH signal transmission method provided in the embodiments of the present application, in a case that the PRACH transmission includes a plurality of PRACH signals, that is, the terminal supports PRACH repetition transmission, the terminal may determine parameters of the PRACH transmission, the parameters including at least one of the following: transmission power of a single PRACH signal and a PRACH resource set. The terminal may further transmit, based on the parameters, the PRACH signals, thereby enabling effective transmission of the plurality of PRACH signals in PRACH repetition transmission and enhancing the performance of the communication system.

Optionally, based on the above embodiments, the method further includes the following step: suspending or stopping, by the terminal in a case that at least one of the following conditions is met, the power ramping counter:

(1) The number of PRACH signals in a single RACH attempt changes relative to the number of PRACH signals in a last RACH attempt.

(2) A feature corresponding to the RACH attempt changes.

(3) A PRACH resource set determined in a single RACH attempt belongs to a different feature or feature combination than a PRACH resource set determined in a last RACH attempt.

(4) A PRACH resource set selected in a single RACH attempt changes relative to a PRACH resource set selected in a last RACH attempt.

(5) At least part of the PRACH signals in a last RACH attempt were not actually transmitted or were transmitted with reduced power.

(6) An initial target received power determined in a single RACH attempt changes relative to an initial target received power determined in a last RACH attempt.

(7) A synchronization signal and physical broadcast channel block (Synchronization Signal and PBCH block, SSB) or a channel state information reference signal (Channel State Information-Reference Signal, CSI-RS) corresponding to a single RACH attempt changes relative to an SSB or CSI-RS corresponding to a last RACH attempt.

(8) Different PRACH signals within a single RACH attempt correspond to different SSBs or CSI-RSs.

(9) An SSB or CSI-RS corresponding to the first of the PRACH signals in a single RACH attempt changes relative to an SSB or CSI-RS corresponding to a final PRACH signal in a last RACH attempt.

The features mentioned in the embodiments of the present application may include the following: conventional four-step random access (not supporting PRACH repetition transmission), PRACH repetition of 2, PRACH repetition of 4, PRACH repetition of 8, combinations of PRACH repetition and Msg3 repetition, and the like.

By applying the above conditions, this embodiment enables the terminal to promptly suspend or stop the power ramping counter. That is, the terminal may refrain from performing power ramping, thereby effectively reducing the transmit power of the terminal and contributing to lower power consumption. A detailed description of this example is provided in Embodiment 3 hereinafter.

Optionally, based on the above embodiments, the method further includes the following step: initializing (may be reinitializing), based on a PRACH resource set selected in a current RACH attempt in a case that the PRACH resource set selected in the current RACH attempt changes relative to a PRACH resource set selected in a last RACH attempt, the first power control-related parameters, the first power control-related parameters including at least one of the following: an initial target received power, a power ramping step, and a value of a power ramping counter.

In this embodiment, by initializing the first power control-related parameters, the terminal can determine an appropriate PRACH signal transmit power in a case that the PRACH resource set selected during the current RACH attempt changes.

Initializing the first power control-related parameters mentioned in this embodiment includes at least one of the following:

(1) The initial target received power is initialized to an initial target received power corresponding to the PRACH resource set selected in the current RACH attempt.

(2) The power ramping step is initialized to a power ramping step corresponding to the PRACH resource set selected in the current RACH attempt.

(3) The value of the power ramping counter is set to zero or held without increment.

(4) The power ramping step is adjusted to the power ramping step corresponding to the PRACH resource set selected in the current RACH attempt, and based on the target received power used for one PRACH signal in the last RACH attempt or the total target received power used in the last RACH attempt, power ramping is performed according to the power ramping step.

In this embodiment, in a case that the first power control-related parameters are initialized, the method further includes at least one of the following:

(1) An additional power ramping counter is introduced, which is configured to compensate for a difference between a current power ramping step and a last power ramping step, where the additional power ramping counter may be different from the power ramping counter mentioned above.

(2) Based on the difference between the current power ramping step and the last power ramping step, a power offset is determined for power compensation.

Optionally, based on the above embodiments, at least one of the following is satisfied:

(1) PRACH resource sets corresponding to a first RACH attempt and a second RACH attempt are different, where the number of PRACH signals in the first RACH attempt and the second RACH attempt is not equal.

(2) Features or feature combinations corresponding to the first RACH attempt and the second RACH attempt are different, where the number of PRACH signals in the first RACH attempt and the second RACH attempt is not equal.

(3) PRACH resource sets corresponding to a third RACH attempt and a fourth RACH attempt support use between the third RACH attempt and the fourth RACH attempt, where the number of PRACH signals in the third RACH attempt and the fourth RACH attempt is equal.

A detailed description of this example is provided in Embodiment 5 hereinafter.

Optionally, the method provided by this embodiment further includes the following step: during a current RACH attempt, in a case that the number of RACH attempts reaches a first threshold, or the number of times the currently selected PRACH resource set is used reaches a second threshold, reselecting a PRACH resource set in the next RACH attempt, and applying a usage number threshold corresponding to the reselected PRACH resource set, where the usage number threshold may represent the maximum number of times the PRACH resource set can be used.

Optionally, based on the above embodiments, determining, by the terminal, the PRACH resource set of the PRACH transmission includes: determining, in a case that the PRACH resource set is configured with a first preamble resource set and a second preamble resource set and based on one of the following, the preamble resource set:

(1) whether Msg3 is transmitted with repetitions; and

(2) a measured path loss value and a threshold, the threshold being determined according to a predefined rule and based on a maximum transmit power, an initial target received power, and a correction value. The correction value may be configured by the network or determined according to default rules. For example, the correction value can be determined based on at least one of the following: whether PRACH repetition occurs, the number of PRACH repetitions, or whether Msg3 repetition occurs.

In this embodiment, the first preamble resource set may be GroupA, and the second preamble resource set may be GroupB.

A detailed description of this example is provided in Embodiment 5 hereinafter.

Optionally, in this embodiment, the initial target received power referred to determine the preamble resource set includes one of the following:

(1) a total initial target received power corresponding to the current RACH attempt, or an initial target received power corresponding to one PRACH signal in a current RACH attempt;
(2) a total initial target received power corresponding to an initial RACH attempt, or an initial target received power corresponding to one PRACH signal in the initial RACH attempt; and
(3) an initial target received power corresponding to a fifth RACH attempt or a first PRACH signal, the fifth RACH attempt or the first PRACH signal being determined based on a configuration by a network-side device.

Optionally, based on the above embodiments, the method further includes: determining, based on at least one of the following, an initial target received power referenced for a single Msg3 transmit power determination:

(1) an initial target received power corresponding to a single RACH attempt;
(2) an initial target received power corresponding to one PRACH signal in the RACH attempt; and
(3) a target initial target received power determined based on a configuration by a network-side device.

A detailed description of this example is provided in Embodiment 4 hereinafter.

Optionally, based on the above embodiments, the method further includes: determining, based on at least one of the following, a power ramping accumulation referenced for Msg3 power determination:

(1) a power ramping accumulation between a target received power of one PRACH signal in an initial RACH attempt and a target received power of one PRACH signal in a final RACH attempt;
(2) a power ramping accumulation between a total target received power of the initial RACH attempt and a total target received power of the final RACH attempt; and
(3) a power ramping accumulation between a sixth RACH attempt or a second PRACH signal, the sixth RACH attempt or the second PRACH signal being determined based on a configuration by a network-side device.

A detailed description of this example is provided in Embodiment 4 hereinafter.

Optionally, based on the above embodiments, the method further includes: in the case of contention-free random access (CFRA), the method further includes at least one of the following:

(1) determining, based on a random access opportunity (RO) mask, a subset of RO resources, where different RO mask indices represent different subsets of RO resources;
(2) determining, based on different preamble partitions, a subset of preambles on the random access opportunity (RO); and
(3) determining, based on an indication from the network-side device, the PRACH resources to be used.

Optionally, in parallel with the previous embodiment, for determining resources corresponding to a plurality of different PRACH repetition numbers, the method further includes at least one of the following:

(1) determining, based on an RO mask, a subset of RO resources under a first RO resource for use by other PRACH repetition numbers, where different RO mask indices represent different subsets of RO resources, and the first RO resource corresponds to the RO resource associated with the maximum PRACH repetition number linked to the SSB;
(2) determining, based on preamble partitions, which preamble subsets on the RO are used for which PRACH repetition numbers; and
(3) using the RO subset at the target location of the RO resource corresponding to the maximum PRACH repetition number for other PRACH repetition numbers.

A detailed description of the above two parallel examples is provided in Embodiment 6 hereinafter.

The PRACH signal transmission method provided in the embodiments of the present application is described in detail with reference to several specific embodiments.

Embodiment 1

This embodiment mainly describes the determination of the transmit power for each PRACH signal transmission (or each PRACH signal), where the initial target received power or the power ramping step is determined based on a single PRACH signal transmission.

The initial target received power (preambleReceivedTargetPower) refers to the initial target received power of each PRACH signal transmitted in a single RACH attempt. The power ramping step (powerRampingStep) refers to the power ramping step of one PRACH signal transmitted in a single RACH attempt relative to one PRACH signal transmitted in the last RACH attempt.

The power ramping step between different RACH attempts may be identical or different.

No power ramping is performed between PRACH signal transmissions in a single RACH attempt, that is, the power ramping counter (PREAMBLE_POWER_RAMPING_COUNTER) remains the same for all PRACH signals transmitted in the RACH attempt.

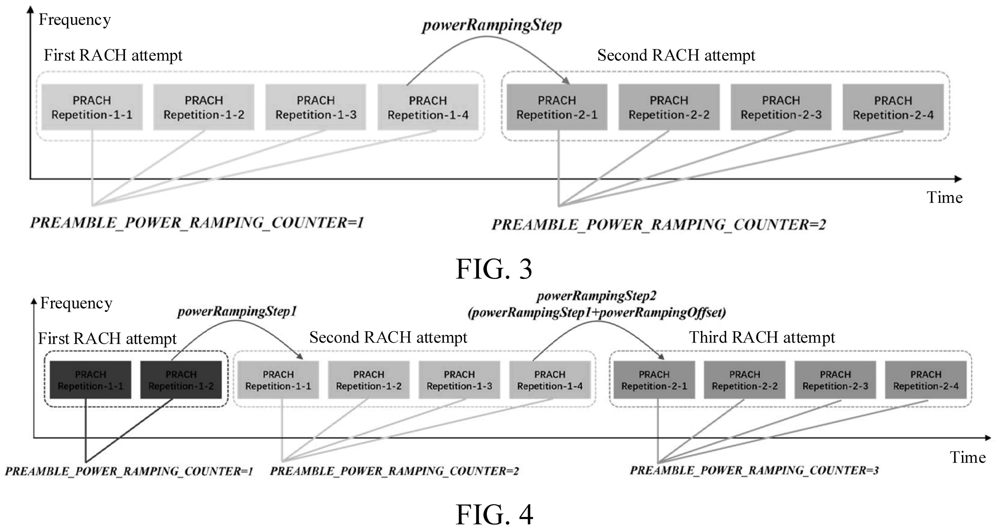

For example, as shown in FIG. 3, the terminal (e.g., UE) performs two RACH attempts, each RACH attempt including four PRACH signal transmissions, with the initial target received power of each PRACH signal transmission being preambleReceivedTargetPower. The power ramping of a single PRACH signal transmitted in a subsequent RACH attempt relative to a single PRACH signal transmitted in the initial RACH attempt is given by powerRampingStep.

For each PRACH signal transmitted in the initial RACH attempt, the target received power may be determined as:

PREAMBLE_RECEIVED_TARGET_POWER = preambleReceivedTargetPower + DELTA_PREAMBLE + (PREAMBLE_POWER_RAMPING_COUNTER - 1) * powerRampingStep = preambleReceivedTargetPower + DELTA_PREAMBLE.

For each PRACH signal transmittedin the subsequent RACH attempt, the target received power may be determined as:

PREAMBLE_RECEIVED_TARGET_POWER = preambleReceivedTargetPower + DELTA_PREAMBLE + (PREAMBLE_POWER_RAMPING_COUNTER - 1) * powerRampingStep = preambleReceivedTargetPower + DELTA_PREAMBLE + 1 * powerRampingStep.

DELTA_PREAMBLE is a power offset determined by the terminal according to the network configuration.

Then, the UE determines the transmit power $P_{PRACH,b,f,c}(i)$ of each PRACH signal transmission according to the target received power of each PRACH signal transmission, which may be given by:

$$P_{PRACH,b,f,c}(i) = \min\{P_{CMAX,f,c}(i), P_{PRACH,target,f,c} + PL_{b,f,c}\} \ [\text{dBm}],$$

where $P_{CMAX,f,c}(i)$ is the maximum transmit power of the UE, $P_{PRACH,target,f,c}$ is the target received power, and $PL_{b,f,c}$ is a path loss value measured by the UE.

For example, as shown in FIG. 4, the UE performs three RACH attempts, where the power ramping steps between different RACH attempts are different, denoted as powerRampingStep1 and powerRampingStep2, and powerRampingOffset represents the power ramping offset introduced due to the differing power ramping steps.

The target received power for each PRACH signal transmitted in the initial RACH attempt is: preambleReceivedTargetPower + DELTA_PREAMBLE.

The target received power for each PRACH signal transmitted in the subsequent RACH attempt is: preambleReceivedTargetPower + DELTA_PREAMBLE + (Counter1 - 1) * powerRampingStep1. In this case, the value of the counter is Counter1.

The target received power for each PRACH signal transmitted in a further RACH attempt is: preambleReceivedTargetPower + DELTA_PREAMBLE + (Counter2 - 1) * powerRampingStep2 + powerRampingOffset, where the counter value is Counter2 at this time, and powerRampingOffset can be defined as (Counter1 - 1) * (powerRampingStep1 - powerRampingStep2). It can be understood that Counter2, relative to Counter1, may either remain unchanged or be incremented by 1 according to the rules defined by the protocol.

Then, the UE determines the transmit power $P_{PRACH,b,f,c}(i)$ for each PRACH signal transmission, which can be calculated specifically using the formula in the previous example.

Embodiment 2

This embodiment mainly describes the determination of the transmit power for each PRACH signal transmission, where the initial target received power or the power ramping step is determined based on a single RACH attempt.

The initial target received power, preambleReceivedTargetPower, is the total initial target received power for all PRACH signals transmitted in a single RACH attempt. The power ramping step, powerRampingStep, is the ramping step between the total target received power of a single RACH attempt and the total target received power of the last RACH attempt.

The power ramping step between different RACH attempts may be identical or different.

No power ramping is performed between PRACH signals transmitted in a single RACH attempt.

The UE determines the total target received power for a single RACH attempt, denoted as PREAMBLE_RECEIVED_TARGET_POWER_TOTAL, and further determines the target received power for each PRACH signal transmitted in the RACH attempt, denoted as PREAMBLE_RECEIVED_TARGET_POWER.

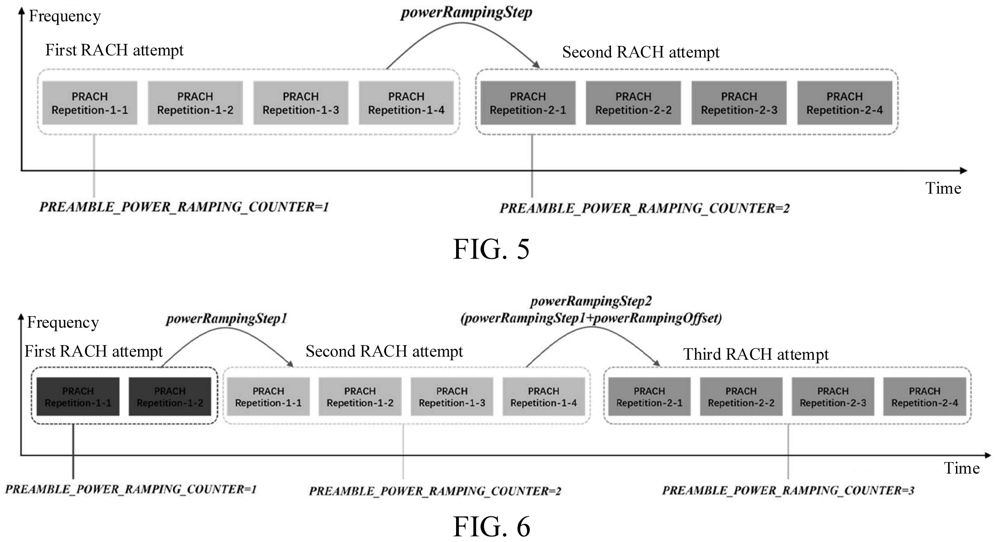

For example, as shown in FIG. 5, the UE performs two RACH attempts, each RACH attempt including four PRACH signal transmissions. The sum of the initial target received powers of the four PRACH signal transmissions, i.e., the total initial target received power, is preambleReceivedTargetPower.

The total target received power of all PRACH signals transmitted in the initial RACH attempt can be determined as:

PREAMBLE_RECEIVED_TARGET_POWER_TOTAL = preambleReceivedTargetPower + DELTA_PREAMBLE + (PREAMBLE_POWER_RAMPING_COUNTER - 1) * powerRampingStep = preambleReceivedTargetPower + DELTA_PREAMBLE.

The total target received power of all PRACH signals transmitted in the subsequent RACH attempt can be determined as:

PREAMBLE_RECEIVED_TARGET_POWER_TOTAL = preambleReceivedTargetPower + DELTA_PREAMBLE + (PREAMBLE_POWER_RAMPING_COUNTER - 1) * powerRampingStep = preambleReceivedTargetPower + DELTA_PREAMBLE + 1 * powerRampingStep.

The UE further determines the target received power for each PRACH signal transmitted in the RACH attempt, for example, as:

PREAMBLE_RECEIVED_TARGET_POWER = PREAMBLE_RECEIVED_TARGET_POWER_TOTAL - 10 * $\log_{10}$ (numRepetitionPerRACH). numRepetitionPerRACH = 4 denotes the number of PRACH repetition transmissions in a single RACH attempt, i.e., the number of PRACH signals included in the RACH attempt.

Finally, the UE determines the transmit power $P_{PRACH,b,f,c}(i)$ for each PRACH signal transmission, which can be calculated, for example, as:

$$P_{PRACH,b,f,c}(i) = \min\{P_{CMAX,f,c}(i), P_{PRACH,target,f,c} + PL_{b,f,c}\} \ [dBm].$$

For example, as shown in FIG. 6, the UE performed three RACH attempts, with different power ramping steps between different RACH attempts. The total target received power for all PRACH signals transmitted in the initial RACH attempt can be determined as: PREAMBLE_RECEIVED_TARGET_POWER_TOTAL = preambleReceivedTargetPower + DELTA_PREAMBLE.

The total target received power for the subsequent RACH attempt can be determined as: PREAMBLE_RECEIVED_TARGET_POWER_TOTAL = preambleReceivedTargetPower + DELTA_PREAMBLE + (Counter1 - 1) * powerRampingStep.

The total target received power for the further RACH attempt can be determined as: PREAMBLE_RECEIVED_TARGET_POWER_TOTAL = preambleReceivedTargetPower + DELTA_PREAMBLE + (Counter2 - 1) * powerRampingStep + powerRampingOffset, where powerRampingOffset is the power ramping offset introduced by different power ramping steps and can be defined as: (Counter1 - 1) * (powerRampingStep1 - powerRampingStep2). It can be understood that Counter2, relative to Counter1, may either remain unchanged or be incremented by 1 according to the rules defined by the protocol.

The UE further determines the target received power, PREAMBLE_RECEIVED_TARGET_POWER, for each PRACH signal transmitted, and ultimately determines the transmit power $P_{PRACH,b,f,c}(i)$ for each PRACH.

It can be understood that the approach of Embodiment 1 is more suitable for PRACH repetition transmissions using different transmit beams, as the base station determines the strongest beam by independently detecting the PRACH signals of different transmit beams. The approach of Embodiment 2 is more suitable for PRACH repetition transmissions using the same transmit beam, where the base station accumulates the power of the N repeated PRACH signals before performing detection. Further optionally, Embodiment 1 and Embodiment 2 can be combined, with the parameters of the calculation formula for the target received power explicitly configured via higher-layer signaling or determined according to default rules, for example:

PREAMBLE_RECEIVED_TARGET_POWER = preambleReceivedTargetPower + DELTA_PREAMBLE + (PREAMBLE_POWER_RAMPING_COUNTER - 1) * powerRampingStep + powerRampingOffset - DeltaConfigure.

All parameters in the above formula are integers, whereas the result of calculating N * log10(N) is not an integer. The terminal needs to perform rounding during actual calculations. To ensure the accuracy of the formula calculation, a specific integer, such as DeltaConfiguration, is recommended to replace 10 * log10(N).

In the above formula, DeltaConfigure is explicitly configured via higher-layer signaling, for example, for PRACH repetition transmissions using different beams, DeltaConfigure = 0; for PRACH repetition transmissions using the same beam twice, DeltaConfigure = 3; if the base station's PRACH energy accumulation detection algorithm has poor energy accumulation efficiency, DeltaConfigure = 2 can be configured via higher-layer signaling; for PRACH repetition transmissions using the same beam four times, DeltaConfigure = 6; for PRACH repetition transmissions using the same beam four times, with the base station's PRACH energy accumulation detection algorithm performing accumulation detection over every two PRACH signals, DeltaConfigure = 3 can be configured via higher-layer signaling. Alternatively, according to protocol-predefined rules: for PRACH repetition transmissions using different beams, DeltaConfigure = 0; for PRACH repetition transmissions using the same beam twice, DeltaConfigure = 3; for PRACH repetition transmissions using the same beam four times, DeltaConfigure = 6; for PRACH repetition transmissions using the same beam eight times, DeltaConfigure = 9. Alternatively, when DeltaConfigure is explicitly configured via higher-layer signaling, the configured value is used; if no explicit configuration is provided, DeltaConfigure is determined according to default rules, for example, DeltaConfigure = 3 for two repetitions, DeltaConfigure = 6 for four repetitions, and DeltaConfigure = 9 for eight repetitions.

Embodiment 3

This embodiment mainly illustrates the determination of the power ramping counter.

In some embodiments, the determination of suspending or stopping the power ramping counter for PRACH repetition transmissions may include one or more of the following conditions:

(1) The number of PRACH signals in a single RACH attempt changes relative to the number of PRACH signals in a last RACH attempt.
(2) A feature corresponding to the RACH attempt changes.
(3) A PRACH resource set determined in a single RACH attempt belongs to a different feature or feature combination than a PRACH resource set determined in a last RACH attempt.
(4) A PRACH resource set selected in a single RACH attempt changes relative to a PRACH resource set selected in a last RACH attempt.
(5) At least part of the PRACH signals in a last RACH attempt were not actually transmitted or were transmitted with reduced power.
(6) An initial target received power determined in a single RACH attempt changes relative to an initial target received power determined in a last RACH attempt.
(7) A synchronization signal and physical broadcast channel block (Synchronization Signal and PBCH block, SSB) or a channel state information reference signal (Channel State Information-Reference Signal, CSI-RS) corresponding to a single RACH attempt changes relative to an SSB or CSI-RS corresponding to a last RACH attempt.
(8) Different PRACH signals within a single RACH attempt correspond to different SSBs or CSI-RSs.
(9) An SSB or CSI-RS corresponding to the first of the PRACH signals in a single RACH attempt changes relative to an SSB or CSI-RS corresponding to a final PRACH signal in a last RACH attempt.

The features mentioned in the embodiments of the present application may include the following: conventional four-step random access (not supporting PRACH repetition transmission), PRACH repetition of 2, PRACH repetition of 4, PRACH repetition of 8, combinations of PRACH repetition and Msg3 repetition, and the like.

By applying the above conditions, this embodiment enables the terminal to promptly suspend or stop the power ramping counter. That is, the terminal may refrain from performing power ramping, thereby effectively reducing the transmit power of the terminal and contributing to lower power consumption.

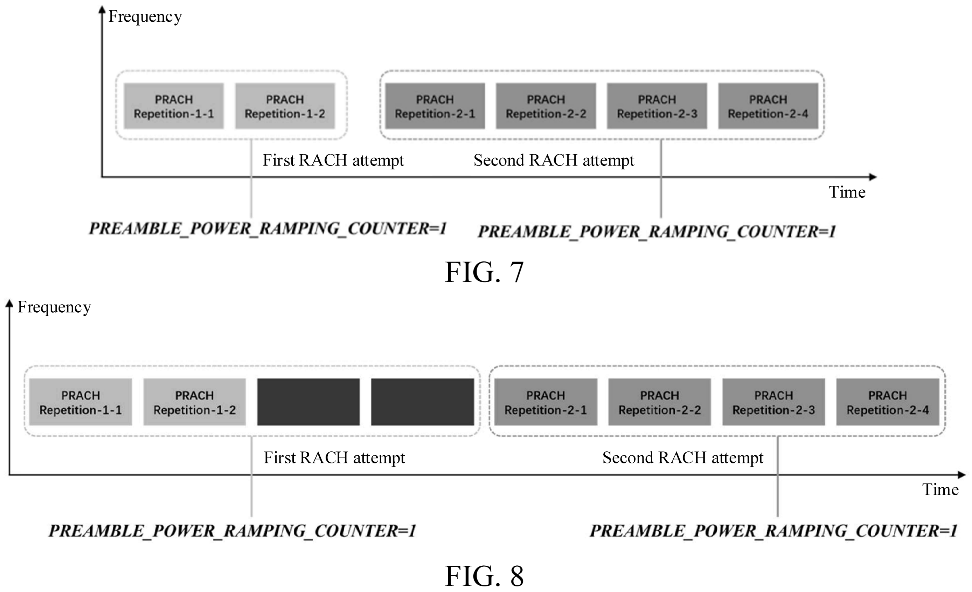

For example, as shown in FIG. 7, the number of PRACH repetitions in the subsequent RACH attempt is greater than that in the initial RACH attempt, and thus, the power ramping counter can be suspended.

As shown in FIG. 8, in the initial RACH attempt, part PRACH repetitions (the third and fourth) are not actually transmitted. In this case, the power ramping counter for the subsequent RACH attempt can be suspended.

For example, the PRACH resource selected in the initial RACH attempt corresponds to the feature PRACH-Repetition, whereas the PRACH resource selected in the subsequent RACH attempt corresponds to the feature combination (PRACH-Repetition and msg-3-Repetition). In this case, the power ramping counter for the subsequent RACH attempt can be suspended.

For example, the initial target received power in the initial RACH attempt is preambleReceivedTargetPower - 1, and the initial target received power in the subsequent RACH attempt is preambleReceivedTargetPower - 2. In this case, the power ramping counter for the subsequent RACH attempt can be suspended.

For example, the initial RACH attempt uses the resource corresponding to SSB1, and the subsequent RACH attempt uses the resource corresponding to SSB2. In this case, the power ramping counter for the subsequent RACH attempt can be suspended.

For example, in a case that a single RACH attempt includes four PRACH signal transmitted and at least part of the PRACH transmissions correspond to different SSB/CSI-RS, the power ramping counter can be suspended.

Additionally, when the PRACH resource set selected in the current RACH attempt changes relative to the PRACH resource set selected in the last RACH attempt, the determination of power control-related parameters can be reinitialized according to the currently selected resource set, including one or more of the following:

(1) The initial target received power is initialized to the initial target received power corresponding to the selected resource set.
(2) The power ramping step is initialized to the power ramping step corresponding to the selected resource set.
(3) The power ramping counter is set to zero or held without increment.
(4) The power ramping step is adjusted to the power ramping step corresponding to the PRACH resource set selected in the current RACH attempt, and based on the target received power used for one PRACH signal in the last RACH attempt or the total target received power used in the last RACH attempt, power ramping is performed according to the power ramping step.

For example, the UE uses the PRACH resource set corresponding to the PRACH repetition-2 feature in the initial RACH attempt, and selects the PRACH resource set corresponding to the PRACH repetition-4 & Msg3 repetition feature combination in the subsequent RACH attempt, then the initial target received power and the power ramping step are initialized to the initial target received power and power ramping step corresponding to the currently selected resource set, and the power ramping counter is set to zero.

Embodiment 4

This embodiment mainly describes the determination of the transmit power of Msg3.

In some embodiments, when different RACH attempts use different preambleReceivedTargetPower values for PRACH transmissions, the initial target received power $P_{O\_PRE}$ referenced in the Msg3 power determination may be determined by one or more of the following methods:

(1) determined by the preambleReceivedTargetPower corresponding to a specific RACH attempt, such as the initial RACH attempt or the final RACH attempt;
(2) determined by the preambleReceivedTargetPower corresponding to a single PRACH signal transmitted in a specific RACH attempt, such as preambleReceivedTargetPower corresponding to a single PRACH signal transmitted in the initial RACH attempt, or preambleReceivedTargetPower corresponding to a single PRACH signal transmitted in the final RACH attempt.
(3) determined according to a network configuration that specifies which preambleReceivedTargetPower to use.

In some embodiments, the power ramping accumulation $\Delta P_{rampup\_requested,b,f,c}$ referenced in the Msg3 power determination may be determined by one or more of the following methods:

(1) determined by a power ramping accumulation between a target received power of a single PRACH signal transmitted in the initial RACH attempt and a target received power of a single PRACH signal transmitted in the final RACH attempt;
(2) determined by a power ramping accumulation between a total target received power of the initial RACH attempt and a total target received power of the final RACH attempt; and
(3) determined according to a network configuration that specifies the power ramping accumulation between certain RACH attempts or PRACH transmissions.

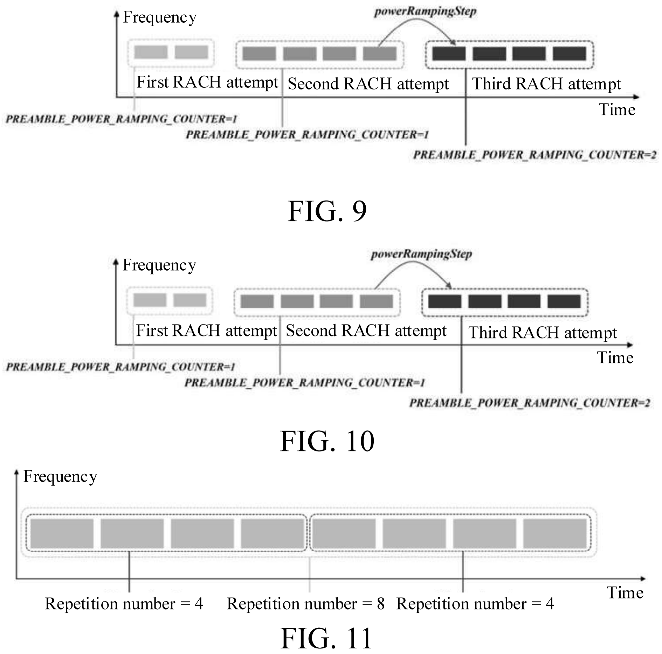

For example, in Embodiment 1, when the initial target received power or the power ramping step is transmitted for a single PRACH signal transmitted in a RACH attempt, the UE may determine the transmit power of Msg3 based on the initial target received power of the PRACH signal transmission, and further based on the power ramping accumulation between the target received power of a single PRACH signal transmitted in the initial RACH attempt and the target received power of a single PRACH signal transmitted in the final RACH attempt. As shown in FIG. 9, the UE refers to the initial target received power preambleReceivedTargetPower of a single PRACH signal transmitted, and the power ramping accumulation from the initial RACH attempt to the further RACH attempt is given by powerRampingStep $\times$ (2 - 1).

For example, in Embodiment 1, when the initial target received power or the power ramping step is transmitted for a single PRACH signal transmitted in a RACH attempt, the UE may determine the transmit power of Msg3 based on the total initial target received power of all PRACH signals transmitted in the final RACH attempt, and further based on the power ramping accumulation between the target received power of a single PRACH signal transmitted in the initial RACH attempt and the target received power of a single PRACH signal transmitted in the final RACH attempt. For FIG. 9, if the further RACH attempt includes four PRACH signal transmissions, the initial target received power referenced for Msg3 is given by preambleReceivedTargetPower + 10 * log10(4), and the power ramping accumulation is powerRampingStep.

For example, in Embodiment 2, when the initial target received power or the power ramping step is configured for a RACH attempt, the UE may determine the transmit power of Msg3 based on the initial target received power preambleReceivedTargetPower of a single RACH attempt, and further based on the power ramping accumulation between the total target received power of the initial RACH attempt and the total target received power of the final RACH attempt. For FIG. 10, the power ramping accumulation is powerRampingStep.

For example, in Embodiment 2, when the initial target received power or the power ramping step is configured for a RACH attempt, the UE may determine the transmit power of Msg3 based on the initial target received power of a single PRACH signal transmitted in the final RACH attempt, and further based on the power ramping accumulation between the target received power of a single PRACH signal transmitted in the initial RACH attempt and the target received power of a single PRACH signal transmitted in the final RACH attempt. For FIG. 10, the initial target received power referenced for the UE is given by preambleReceivedTargetPower - 10 * log10(4), and the power ramping accumulation is powerRampingStep.

Optionally, if the higher layer configures the parameter DeltaConfigure, then DeltaConfigure is used in place of 10 * log10(N) when calculating the transmit power of Msg3.

Embodiment 5

This embodiment mainly describes the determination of PRACH transmission resources. This embodiment may be implemented independently or in combination with at least one of Embodiment 1 to Embodiment 4.

In some embodiments, PRACH resource sets corresponding to different PRACH repetition numbers may vary as different features or feature combinations across different RACH attempts.

For example, if the UE uses two PRACH repetitions in the initial RACH attempt, selecting the PRACH resource set corresponding to the PRACH repetition-2 feature, it may switch in the subsequent RACH attempt to the resource set corresponding to the PRACH repetition-2 & Msg3 repetition feature combination.

For example, if the UE uses two PRACH repetitions in the initial RACH attempt, selecting the PRACH resource set corresponding to the PRACH repetition-2 feature, it may switch in the subsequent RACH attempt to the resource set corresponding to the PRACH repetition-4 & Msg3 repetition feature combination.

In some embodiments, only PRACH resource sets corresponding to the same PRACH repetition number can be used across different RACH attempts.

For example, if the UE uses two PRACH repetitions in the initial RACH attempt, selecting the PRACH resource set corresponding to the PRACH repetition-2 feature, it can only use the resource set corresponding to the PRACH repetition-2 feature in the subsequent RACH attempt.

Additionally, during the current RACH attempt, if the number of RACH attempts reaches a first threshold, or the consecutive number of the currently selected PRACH resource set reaches a second threshold, the UE may reselect the target PRACH resource set in the next RACH attempt. The target resource set may be the same as or different from the currently selected resource set.

When the PRACH resource set selected in the current RACH attempt differs from the PRACH resource set selected in the last RACH attempt, the usage number threshold corresponding to the newly selected PRACH resource set is applied.

When the number of RACH attempts corresponding to a feature or feature combination reaches the usage number threshold, or when at least part or all of the PRACH transmissions in a single RACH attempt reach the maximum transmit power, or when at least part of the PRACH signals transmitted in the RACH attempt are not actually transmitted or are transmitted with reduced power, the physical layer may notify the higher layer of the event, and the higher layer decides whether to reselect a new feature or feature combination for the RACH attempt.

In some embodiments, for determining the preamble resources, when the PRACH resource is configured with GroupB, the initial target received power, preambleReceivedTargetPower, may be determined by considering the Msg3 size and one or more of the following methods:

(1) determined by the total initial target received power, preambleReceivedTargetPower, corresponding to the current RACH attempt, or the preambleReceivedTargetPower corresponding to a single PRACH signal transmitted in the current RACH attempt;

(2) determined by the total initial target received power, preambleReceivedTargetPower, corresponding to the initial RACH attempt, or the preambleReceivedTargetPower corresponding to a single PRACH signal transmitted in the initial RACH attempt; and

(3) determined based on a network configuration that specifies which RACH attempt or which PRACH signal to use for preambleReceivedTargetPower.

In some embodiments, whether Msg3 is repeated may affect the power calculation and the selection of preamble resources.

For example, the UE may randomly select a preamble resource from GroupA or GroupB based on the initial target received power and the Msg3 size, where GroupA and GroupB correspond, respectively, to the first preamble resource set and the second preamble resource set. If the Msg3 size is greater than a predefined threshold and the path loss is less than PCMAX - preambleReceivedTargetPower - Delta - msg3 - DeltaPreamble - messagePowerOffsetGroupB (where PCMAX is the UE's maximum transmit power; preambleReceivedTargetPower is defined, according to Embodiment 1, as the target received power for a single PRACH signal transmitted, or, according to Embodiment 2, as the sum of the powers of a plurality of PRACH signals in a single PRACH repetition transmission attempt), the UE randomly selects a preamble resource from GroupB; otherwise, it randomly selects a preamble resource from GroupA. Delta is an offset either predefined by the protocol or configured by the higher layer, representing the impact of the Msg3 transmission method. For example, when Msg3 is not transmitted with repetitions, Delta = 0; when PRACH repetition transmission is combined with Msg3 repetition transmission, Delta is either a predefined value (10 * log10(M), where M is the minimum number of Msg3 repetitions) or explicitly indicated by the higher layer.

In some embodiments, for determining the PRACH repetition number (RO count), when the SSB corresponding to a single RACH attempt changes relative to the last RACH attempt, the PRACH repetition number may be re-determined according to the RSRP and the corresponding resource set reselected, or it may remain the same as in the last RACH attempt.

Embodiment 6

This embodiment mainly describes the determination of PRACH resources for different repetition numbers and for CFRA. This embodiment may be implemented independently or in combination with at least one of Embodiment 1 to Embodiment 4.

In some embodiments, for PRACH repetitions under contention-free random access (CFRA), the PRACH resources may be determined by one or more of the following methods:

(1) determining the subset of RO resources to use via an RO mask, where different RO_mask_index values represent different subsets of RO resources;

(2) determining the subset of Preambles on the ROs via Preamble Partition; and

(3) determining which PRACH resources to use according to network indication.

For example, as shown in FIG. 11, RO_mask_index = 1 may indicate that the first four ROs and the last four ROs of the eight RO resources each form an RO subset, each of which can be used for four PRACH repetitions under CFRA.

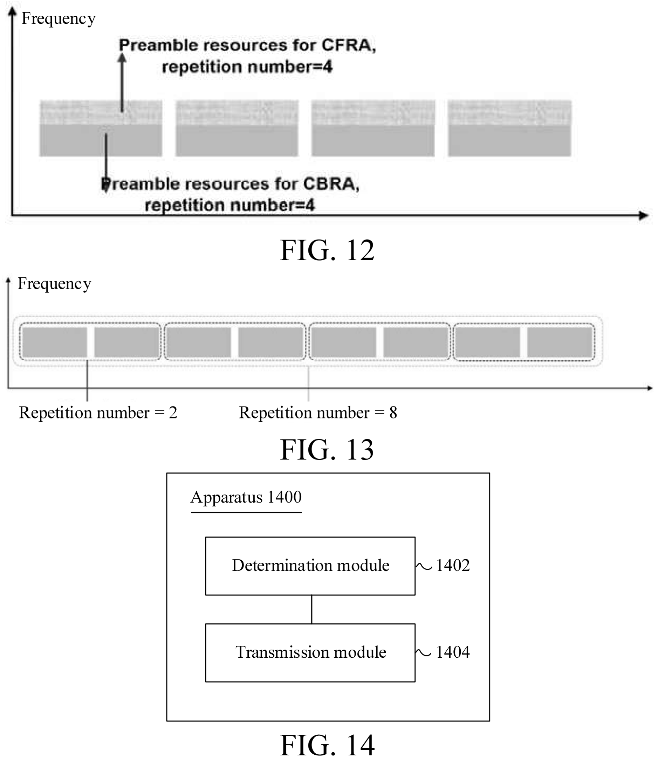

For example, as shown in FIG. 12, a portion of the Preamble resources on the ROs can be allocated for CFRA use through Preamble Partition.

In some embodiments, for determining resources for a plurality of different PRACH repetition numbers, one or more of the following methods may be employed:

(1) An RO mask is used to determine subsets of RO resources within the RO resources corresponding to the maximum PRACH repetition number associated with an SSB for use by other PRACH repetition numbers, where different RO_mask_index values represent different RO resource subsets.

(2) Preamble Partition is used to determine which Preamble subsets on the ROs are allocated for which PRACH repetition numbers.

(3) By default, RO subsets at specific positions of the RO resources corresponding to the maximum repetition number is used for other PRACH repetition numbers.

For example, as shown in FIG. 11, if the maximum repetition number supported by the cell is eight, on the RO resources corresponding to eight repetitions, RO_mask_index = 1 indicates that the first four ROs and the last four ROs each form an RO subset, which can be used for transmitting four PRACH repetitions.

Alternatively, as shown in FIG. 11, it may be determined by default that the first four ROs of the eight ROs are used for PRACH transmissions with four repetitions, and the last four ROs are also used for PRACH transmissions with four repetitions.

As shown in FIG. 13, RO_mask_index = 2 indicates that two consecutive ROs starting from every odd-numbered RO can be used for two PRACH repetitions.

The PRACH signal transmission method provided in the embodiments of the present application may be executed by a PRACH signal transmission apparatus. In the embodiments of the present application, a PRACH signal transmission apparatus executing the PRACH signal transmission method is taken as an example to illustrate the PRACH signal transmission apparatus provided in the embodiments of the present application.

FIG. 14 is a schematic structural diagram of a PRACH signal transmission apparatus according to an embodiment of the present application, and the apparatus may correspond to a terminal in other embodiments. As shown in FIG. 14, the apparatus 1400 includes the following modules.

A determination module 1402 is configured to determine, by a terminal, parameters of PRACH transmission, the parameters including at least one of the following: transmission power of a single PRACH signal and a PRACH resource set.

A transmission module 1404 is configured to transmit, based on the parameters, the PRACH signal, the PRACH transmission including a plurality of PRACH signals.

The PRACH signal transmission apparatus provided in the embodiments of the present application, in a case that a PRACH transmission includes a plurality of PRACH signals, i.e., supports PRACH repetition transmission, can determine parameters of the PRACH transmission, the parameters including at least one of the following: transmission power of a single PRACH signal and a PRACH resource set. The apparatus may further transmit, based on the parameters, the PRACH signals, thereby enabling effective transmission of the plurality of PRACH signals in PRACH repetition transmission and enhancing the performance of the communication system.

Optionally, in one embodiment, the determination module 1402 is configured to: determine first power control-related parameters, the first power control-related parameters including at least one of the following: an initial target received power, a power ramping step, and a value of a power ramping counter; and determine, based on the first power control-related parameters, the transmission power of the single PRACH signal of the PRACH transmission.

Optionally, in one embodiment, the determination module 1402 is configured to: determine, based on the first power control-related parameters, a target received power of each PRACH signal; and determine, based on the target received power of each PRACH signal, a transmit power of each PRACH signal.

Optionally, in one embodiment, the first power control-related parameters are determined based on one PRACH signal, where the initial target received power is an initial target received power of each PRACH signal in a single RACH attempt; and the power ramping step is a power ramping step of one PRACH signal in the RACH attempt relative to one PRACH signal in a last RACH attempt; or the first power control-related parameters are determined based on a single RACH attempt, where the initial target received power is a total initial target received power of the plurality of PRACH signals in the RACH attempt; and the power ramping step is a ramping step between a total target received power of the RACH attempt and a total target received power of a last RACH attempt, the RACH attempt including a plurality of PRACH signals.

Optionally, in one embodiment, the determination module 1402 is further configured to suspend or stop, in a case that at least one of the following conditions is met, the power ramping counter:

(1) The number of PRACH signals in a single RACH attempt changes relative to the number of PRACH signals in a last RACH attempt.

(2) A feature corresponding to the RACH attempt changes.

(3) A PRACH resource set determined in a single RACH attempt belongs to a different feature or feature combination than a PRACH resource set determined in a last RACH attempt.

(4) A PRACH resource set selected in a single RACH attempt changes relative to a PRACH resource set selected in a last RACH attempt.

(5) At least part of the PRACH signals in a last RACH attempt were not actually transmitted or were transmitted with reduced power.

(6) An initial target received power determined in a single RACH attempt changes relative to an initial target received power determined in a last RACH attempt.

(7) A synchronization signal and physical broadcast channel block (Synchronization Signal and PBCH block, SSB) or a channel state information reference signal (Channel State Information-Reference Signal, CSI-RS) corresponding to a single RACH attempt changes relative to an SSB or CSI-RS corresponding to a last RACH attempt.

(8) Different PRACH signals within a single RACH attempt correspond to different SSBs or CSI-RSs.

(9) An SSB or CSI-RS corresponding to the first of the PRACH signals in a single RACH attempt changes relative to an SSB or CSI-RS corresponding to a final PRACH signal in a last RACH attempt.

Optionally, in one embodiment, the determination module 1402 is further configured to initialize, based on a PRACH resource set selected in a current RACH attempt in a case that the PRACH resource set selected in the current RACH attempt changes relative to a PRACH resource set selected in a last RACH attempt, the first power control-related parameters, the first power control-related parameters including at least one of the following: an initial target received power, a power ramping step, and a value of a power ramping counter.

Optionally, in one embodiment, initializing the first power control-related parameters includes at least one of the following:

(1) The initial target received power is initialized to an initial target received power corresponding to the PRACH resource set selected in the current RACH attempt.

(2) The power ramping step is initialized to a power ramping step corresponding to the PRACH resource set selected in the current RACH attempt.

(3) The value of the power ramping counter is set to zero or held without increment.

(4) The power ramping step is adjusted to the power ramping step corresponding to the PRACH resource set selected in the current RACH attempt, and based on the target received power used for one PRACH signal in the last RACH attempt or the total target received power used in the last RACH attempt, power ramping is performed according to the power ramping step.

Optionally, in one embodiment, the determination module 1402 is further configured to perform at least one of the following:

(1) introduce an additional power ramping counter, which is configured to compensate for a difference between a current power ramping step and a last power ramping step; and

(2) determine, based on the difference between the current power ramping step and the last power ramping step, a power offset for power compensation.

Optionally, in an embodiment, at least one of the following is satisfied: (1) The PRACH resource sets corresponding to a first RACH attempt and a second RACH attempt are different. (2) The features or feature combinations corresponding to the first RACH attempt and the second RACH attempt are different. (3) The PRACH resource sets corresponding to a third RACH attempt and a fourth RACH attempt support usage across the third RACH attempt and the fourth RACH attempt, where the number of PRACH signals in the first RACH attempt and the second RACH attempt is not equal, and the number of PRACH signals in the third RACH attempt and the fourth RACH attempt is equal.

Optionally, in one embodiment, the determination module 1402 is further configured to: during a current RACH attempt, in a case that the number of RACH attempts reaches a first threshold, or the number of times the currently selected PRACH resource set is used reaches a second threshold, reselect a PRACH resource set in the next RACH attempt, and apply a usage number threshold corresponding to the reselected PRACH resource set.

Optionally, in one embodiment, the determination module 1402 is configured to determine, in a case that the PRACH resource set is configured with a first preamble resource set and a second preamble resource set and based on one of the following, the preamble resource set: (1) whether Msg3 is transmitted with repetitions; and (2) a measured path loss value and a threshold, the threshold being determined according to a predefined rule and based on a maximum transmit power, an initial target received power, and a correction value.

Optionally, in one embodiment, the initial target received power referred to determine the preamble resource set includes one of the following:

(1) a total initial target received power corresponding to the current RACH attempt, or an initial target received power corresponding to one PRACH signal in a current RACH attempt;

(2) a total initial target received power corresponding to an initial RACH attempt, or an initial target received power corresponding to one PRACH signal in the initial RACH attempt; and

(3) an initial target received power corresponding to a fifth RACH attempt or a first PRACH signal, the fifth RACH attempt or the first PRACH signal being determined based on a configuration by a network-side device.

Optionally, in an embodiment, the determination module 1402 is further configured to determine, based on at least one of the following, an initial target received power referenced for a single Msg3 transmit power determination:

(1) an initial target received power corresponding to a single RACH attempt;
(2) an initial target received power corresponding to one PRACH signal in the RACH attempt; and
(3) a target initial target received power determined based on a configuration by a network-side device.

Optionally, in one embodiment, the determination module 1402 is further configured to determine, based on at least one of the following, a power ramping accumulation referenced for Msg3 power determination:

(1) a power ramping accumulation between a target received power of one PRACH signal in an initial RACH attempt and a target received power of one PRACH signal in a final RACH attempt;
(2) a power ramping accumulation between a total target received power of the initial RACH attempt and a total target received power of the final RACH attempt; and
(3) a power ramping accumulation between a sixth RACH attempt or a second PRACH signal, the sixth RACH attempt or the second PRACH signal being determined based on a configuration by a network-side device.

The apparatus 1400 according to the embodiments of the present application may refer to the process of the method 200 according to the embodiments of the present application. Each unit/module of the apparatus 1400, as well as other operations and/or functions described above, is configured to implement the corresponding processes in the method 200 and can achieve the same or equivalent technical effects. For brevity, further details are not repeated herein.

The PRACH signal transmission apparatus in the embodiments of the present application may be an electronic device, for example, an electronic device with an operating system, or a component of an electronic device, such as an integrated circuit or a chip. The electronic device may be a terminal or a non-terminal device. Exemplarily, the terminal may include, but is not limited to, the types of terminal 11 listed above, and other devices may include a server, a network attached storage (Network Attached Storage, NAS), or the like, which are not specifically limited in the embodiments of the present application.

The PRACH signal transmission apparatus provided in the embodiments of the present application is capable of implementing the processes realized in the method embodiments illustrated in FIGS. 2 to 13 and achieving the same technical effects. To avoid repetition, a detailed description is omitted herein.

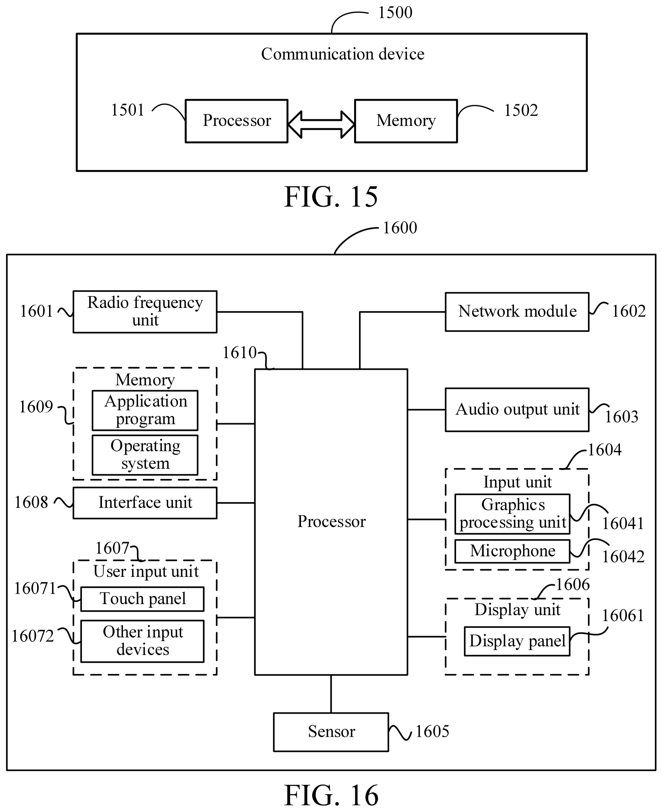

Optionally, as shown in FIG. 15, the embodiments of the present application further provide a communication device 1500, which includes a processor 1501 and a memory 1502. The memory 1502 has programs or instructions executable by the processor 1501 stored therein. For example, when the communication device 1500 is a terminal, the programs or instructions, when executed by the processor 1501, implement the steps of the above PRACH signal transmission method embodiments and achieve the same technical effects. To avoid repetition, a detailed description is omitted herein.

The embodiments of the present application further provide a terminal, including a processor and a communication interface, where the processor is configured to determine parameters of PRACH transmission, the parameters including at least one of the following: transmission power of a single PRACH signal and a PRACH resource set; and the communication interface is configured to transmit, based on the parameters, the PRACH signal, the PRACH transmission including a plurality of PRACH signals. The terminal embodiment corresponds to the above terminal-side method embodiments, and each implementation process and mode of realization described in the above method embodiments is applicable to this terminal embodiment, thereby achieving the same technical effects. In particular, FIG. 16 is a schematic diagram of a hardware structure of a terminal for implementing an embodiment of the present application.

The terminal 1600 includes, but is not limited to, at least part of the following components: a radio frequency unit 1601, a network module 1602, an audio output unit 1603, an input unit 1604, a sensor 1605, a display unit 1606, a user input unit 1607, an interface unit 1608, a memory 1609, and a processor 1610.

A person skilled in the art may understand that the terminal 1600 may further include a power supply (e.g., a battery) configured to provide power to the components. The power supply can be logically connected to the processor 1610 via a power management system, thereby enabling the management of charging, discharging, and power consumption through the power management system. The terminal structure shown in FIG. 16 constitutes no limitation on the terminal. The terminal may include more or fewer components than those illustrated, may combine certain components, or may have different component arrangements, which are not further described herein.

It is to be understood that, in the embodiments of the present application, the input unit 1604 may include a graphics processing unit (Graphics Processing Unit, GPU) 16041 and a microphone 16042. The graphics processing unit 16041 processes image data of still images or videos captured by an image capture apparatus (such as a camera) in video capture mode or image capture mode. The display unit 1606 may include a display panel 16061, which can be implemented as a liquid crystal display, an organic light-emitting diode, or the like. The user input unit 1607 includes at least one of a touch panel 16071 and other input devices 16072. The touch panel 16071 is also referred to as a touchscreen. The touch panel 16071 may include two components: a touch detection apparatus and a touch controller. Other input devices 16072 may include, but are not limited to, a physical keyboard, function keys (e.g., volume control keys, power keys, etc.), a trackball, a mouse, or a joystick, which are not further described herein.

In the embodiments of the present application, the radio frequency unit 1601 may transmit downlink data received from a network-side device to the processor 1610 for processing. Additionally, the radio frequency unit 1601 may transmit uplink data to the network-side device. Generally, the radio frequency unit 1601 includes, but is not limited to, an antenna, an amplifier, a transceiver, a coupler, a low-noise amplifier, and a duplexer.

The memory 1609 may be configured to store software programs or instructions, as well as various data. The memory 1609 may mainly include a first storage area for storing programs or instructions and a second storage area for storing data. The first storage area may store an operating system, at least one application program or instruction required for a function (such as audio playback, image playback, etc.), and the like. In addition, the memory 1609 may include volatile memory or non-volatile memory. The non-volatile memory may include a read-only memory (Read-Only Memory, ROM), a programmable ROM (Programmable ROM, PROM), an erasable PROM (Erasable PROM, EPROM), an electrically erasable PROM (Electrically EPROM, EEPROM), or flash memory. Volatile memory may include random access memory (Random Access Memory, RAM), static RAM (Static RAM, SRAM), dynamic RAM (Dynamic RAM, DRAM), synchronous DRAM (Synchronous DRAM, SDRAM), double data rate SDRAM (Double Data Rate SDRAM, DDRSDRAM), enhanced SDRAM (Enhanced SDRAM, ESDRAM), Synch link DRAM (Synch link DRAM, SLDRAM), or Direct Rambus RAM (Direct Rambus RAM, DRRAM). The memory 1609 in the embodiments of the present application includes, but is not limited to, the above types of memory and any other suitable types of memory.

The processor 1610 may include one or more processing units. Optionally, the processor 1610 integrates an application processor and a modem processor. The application processor primarily handles operations related to the operating system, user interface, application programs, and the like. The modem processor primarily handles wireless communication signals, such as a baseband processor. It can be understood that the above modem processor may not be integrated into the processor 1610.

The processor 1610 may be configured to determine parameters of the PRACH transmission, the parameters including at least one of the following: transmission power of a single PRACH signal and a PRACH resource set. The radio frequency unit 1601 may be configured to transmit, based on the parameters, the PRACH signal, the PRACH transmission including a plurality of PRACH signals.

The terminal provided in the embodiments of the present application, in a case that a PRACH transmission includes a plurality of PRACH signals, i.e., supports PRACH repetition transmission, can determine parameters of the PRACH transmission, the parameters including at least one of the following: transmission power of a single PRACH signal and a PRACH resource set. The terminal may further transmit, based on the parameters, the PRACH signals, thereby enabling effective transmission of the plurality of PRACH signals in PRACH repetition transmission and enhancing the performance of the communication system.

It can be understood that the implementation processes of the implementations described in this embodiment may refer to the related description of the PRACH signal transmission method embodiments, and can achieve the same or equivalent technical effects. To avoid repetition, a detailed description is omitted herein.

The embodiments of the present application further provide a readable storage medium having programs or instructions stored therein. The programs or instructions, when executed by a processor, implement the processes of the above PRACH signal transmission method embodiments and achieve the same technical effects. To avoid repetition, a detailed description is omitted herein.

The processor is a processor of the terminal described in the above embodiments. The readable storage medium may be non-volatile or non-transient. The readable storage medium includes a computer-readable storage medium, for example, a computer read-only memory ROM, a random access memory RAM, a magnetic disk, or an optical disc. In some examples, the readable storage medium may be a non-transitory readable storage medium.

The embodiments of the present application further provide a chip including a processor and a communication interface, where the communication interface is coupled to the processor. The processor is configured to execute programs or instructions to implement the processes of the above PRACH signal transmission method embodiments and achieve the same technical effects. To avoid repetition, a detailed description is omitted herein.

It is to be understood that the chip mentioned in the embodiments of the present application may be referred to as a system-on-chip, a system chip, a chip system, or an on-chip system, and the like.

The embodiments of the present application further provide a computer program or computer program product stored on a storage medium and executed by at least one processor to implement the processes of the above PRACH signal transmission method embodiments and achieve the same technical effects. To avoid repetition, a detailed description is omitted herein.

The embodiments of the present application further provide a PRACH signal transmission system, including a terminal and a network-side device, where the terminal is configured to execute the steps of the above PRACH signal transmission method.

It is to be noted that, as used herein, the terms "include", "comprise", and any of other variants are intended to encompass non-exclusive inclusion, such that a process, method, article, or apparatus that includes a series of elements not only includes those elements but also may include other elements not explicitly listed, or elements inherent to such a process, method, article, or apparatus. In the absence of further limitations, an element defined by the statement "including one ..." does not exclude the presence of additional identical elements in a process, method, article, or apparatus that includes the element. In addition, it is to be noted that the scope of the method and apparatus in the embodiments of the present application is not limited to performing functions in the order shown or discussed. Functions may be performed substantially simultaneously or in an order opposite to that described. For example, the method described may be executed in an order different from that illustrated, and various steps may be added, omitted, or combined. Moreover, features described in reference to certain examples may be combined in other examples.

From the description of the above implementations, a person skilled in the art can clearly understand that the methods of the above embodiments can be implemented by a computer software product together with a necessary general-purpose hardware platform, or, alternatively, entirely by hardware. The computer software product is stored in a storage medium (such as ROM, RAM, magnetic disk, optical disk, etc.) and includes a plurality of instructions configured to cause a terminal or a network-side device to perform the methods described in the embodiments of the present application.

The embodiments of the present application have been described above with reference to the drawings. However, the present application is not limited to the specific implementations described above. The above specific implementations are illustrative rather than restrictive. A person of ordinary skill in the art, in light of the teachings of the present application, may make various modifications and variations without departing from the scope of the spirit of the present application and the claims, all of which are intended to be encompassed within the protection of the present application.

**Claims**

1. A PRACH signal transmission method, comprising:

   determining, by a terminal, parameters of PRACH transmission, the parameters comprising at least one of the following: transmission power of a single PRACH signal and a PRACH resource set; and
   transmitting, based on the parameters, the PRACH signal, the PRACH transmission comprising a plurality of PRACH signals.

2. The method according to claim 1, wherein determining, by a terminal, transmission power of a single PRACH signal of PRACH transmission comprises:

   determining, by the terminal, first power control-related parameters, the first power control-related parameters comprising at least one of the following: an initial target received power, a power ramping step, and a value of a power ramping counter; and
   determining, based on the first power control-related parameters, the transmission power of the single PRACH signal of the PRACH transmission.

3. The method according to claim 2, wherein determining, based on the first power control-related parameters, the transmission power of the single PRACH signal of the PRACH transmission comprises:

   determining, based on the first power control-related parameters, a target received power of each PRACH signal; and
   determining, based on the target received power of each PRACH signal, a transmit power of each PRACH signal.

4. The method according to claim 2, wherein

   the first power control-related parameters are determined based on one PRACH signal, wherein the initial target received power is an initial target received power of each PRACH signal in a single RACH attempt; and the power ramping step is a power ramping step of one PRACH signal in the RACH attempt relative to one PRACH signal in a last RACH attempt; or
   the first power control-related parameters are determined based on a single RACH attempt, wherein the initial target received power is a total initial target received power of the plurality of PRACH signals in the RACH attempt; and the power ramping step is a ramping step between a total target received power of the RACH attempt and a total target received power of a last RACH attempt, the RACH attempt comprising the plurality of PRACH signals.

5. The method according to any one of claims 1 to 4, wherein the method further comprises: suspending or stopping, in a case that at least one of the following conditions is met, the power ramping counter:

the number of PRACH signals in a single RACH attempt changes relative to the number of PRACH signals in a last RACH attempt;
a feature corresponding to the RACH attempt changes;
a PRACH resource set determined in a single RACH attempt belongs to a different feature or feature combination than a PRACH resource set determined in a last RACH attempt;
a PRACH resource set selected in a single RACH attempt changes relative to a PRACH resource set selected in a last RACH attempt;
at least part of the PRACH signals in a last RACH attempt were not actually transmitted or were transmitted with reduced power;
an initial target received power determined in a single RACH attempt changes relative to an initial target received power determined in a last RACH attempt;
a synchronization signal and physical broadcast channel block (SSB) or a channel state information reference signal (CSI-RS) corresponding to a single RACH attempt changes relative to an SSB or CSI-RS corresponding to a last RACH attempt;
different PRACH signals within a single RACH attempt correspond to different SSBs or CSI-RSs; and
an SSB or CSI-RS corresponding to the first of the PRACH signals in a single RACH attempt changes relative to an SSB or CSI-RS corresponding to a final PRACH signal in a last RACH attempt.

6. The method according to any one of claims 1 to 5, further comprising:
initializing, based on a PRACH resource set selected in a current RACH attempt in a case that the PRACH resource set selected in the current RACH attempt changes relative to a PRACH resource set selected in a last RACH attempt, the first power control-related parameters, the first power control-related parameters comprising at least one of the following: an initial target received power, a power ramping step, and a value of a power ramping counter.

7. The method according to claim 6, wherein initializing the first power control-related parameters comprises at least one of the following:

initializing the initial target received power to an initial target received power corresponding to the PRACH resource set selected in the current RACH attempt;
initializing the power ramping step to a power ramping step corresponding to the PRACH resource set selected in the current RACH attempt;
setting the value of the power ramping counter to zero or held without increment; and
adjusting the power ramping step to the power ramping step corresponding to the PRACH resource set selected in the current RACH attempt, and performing, based on the target received power used for one PRACH signal in the last RACH attempt or the total target received power used in the last RACH attempt and according to the power ramping step, power ramping.

8. The method according to claim 7, further comprising at least one of the following:

introducing an additional power ramping counter configured to compensate for a difference between a current power ramping step and a last power ramping step; and
determining, based on the difference between the current power ramping step and the last power ramping step, a power offset for power compensation.

9. The method according to any one of claims 1 to 8, wherein at least one of the following is satisfied:

PRACH resource sets corresponding to a first RACH attempt and a second RACH attempt are different;
features or feature combinations corresponding to the first RACH attempt and the second RACH attempt are different; and
PRACH resource sets corresponding to a third RACH attempt and a fourth RACH attempt support use between the third RACH attempt and the fourth RACH attempt,
the number of PRACH signals in the first RACH attempt and the second RACH attempt being not equal, and the number of PRACH signals in the third RACH attempt and the fourth RACH attempt being equal.

**10.** The method according to claim 9, further comprising:

during a current RACH attempt, in a case that the number of RACH attempts reaches a first threshold, or the number of times the currently selected PRACH resource set is used reaches a second threshold, reselecting a PRACH resource set in the next RACH attempt, and applying a usage number threshold corresponding to the reselected PRACH resource set.

**11.** The method according to any one of claims 1 to 10, wherein determining the PRACH resource set of the PRACH transmission comprises: determining, in a case that the PRACH resource set is configured with a first preamble resource set and a second preamble resource set and based on one of the following, the preamble resource set:

whether Msg3 is transmitted with repetitions; and

a measured path loss value and a threshold, the threshold being determined according to a predefined rule and based on a maximum transmit power, an initial target received power, and a correction value.

**12.** The method according to claim 11, wherein the initial target received power referred to determine the preamble resource set comprises one of the following:

a total initial target received power corresponding to the current RACH attempt, or an initial target received power corresponding to one PRACH signal in a current RACH attempt;

a total initial target received power corresponding to an initial RACH attempt, or an initial target received power corresponding to one PRACH signal in the initial RACH attempt; and

an initial target received power corresponding to a fifth RACH attempt or a first PRACH signal, the fifth RACH attempt or the first PRACH signal being determined based on a configuration by a network-side device.

**13.** The method according to any one of claims 1 to 12, further comprising determining, based on at least one of the following, an initial target received power referenced for a single Msg3 transmit power determination:

an initial target received power corresponding to a single RACH attempt;

an initial target received power corresponding to one PRACH signal in the RACH attempt; and

a target initial target received power determined based on a configuration by a network-side device.

**14.** The method according to any one of claims 1 to 13, further comprising determining, based on at least one of the following, a power ramping accumulation referenced for Msg3 power determination:

a power ramping accumulation between a target received power of one PRACH signal in an initial RACH attempt and a target received power of one PRACH signal in a final RACH attempt;

a power ramping accumulation between a total target received power of the initial RACH attempt and a total target received power of the final RACH attempt; and

a power ramping accumulation between a sixth RACH attempt or a second PRACH signal, the sixth RACH attempt or the second PRACH signal being determined based on a configuration by a network-side device.

**15.** A PRACH signal transmission apparatus, comprising:

a determination module, configured to determine, by a terminal, parameters of PRACH transmission, the parameters comprising at least one of the following: transmission power of a single PRACH signal and a PRACH resource set; and

a transmission module, configured to transmit, based on the parameters, the PRACH signal, the PRACH transmission comprising a plurality of PRACH signals.

**16.** The apparatus according to claim 15, wherein the determination module is configured to:

determine first power control-related parameters, the first power control-related parameters comprising at least one of the following: an initial target received power, a power ramping step, and a value of a power ramping counter; and

determine, based on the first power control-related parameters, the transmission power of the single PRACH signal of the PRACH transmission.

**17.** The apparatus according to claim 16, wherein the determination module is configured to:

determine, based on the first power control-related parameters, a target received power of each PRACH signal; and

determine, based on the target received power of each PRACH signal, a transmit power of each PRACH signal.

18. The apparatus according to claim 16, wherein

the first power control-related parameters are determined based on one PRACH signal, wherein the initial target received power is an initial target received power of each PRACH signal in a single RACH attempt; and the power ramping step is a power ramping step of one PRACH signal in the RACH attempt relative to one PRACH signal in a last RACH attempt; or

the first power control-related parameters are determined based on a single RACH attempt, wherein the initial target received power is a total initial target received power of the plurality of PRACH signals in the RACH attempt; and the power ramping step is a ramping step between a total target received power of the RACH attempt and a total target received power of a last RACH attempt, the RACH attempt comprising the plurality of PRACH signals.

19. The apparatus according to any one of claims 15 to 18, wherein the determination module is further configured to suspend or stop, in a case that at least one of the following conditions is met, the power ramping counter:

the number of PRACH signals in a single RACH attempt changes relative to the number of PRACH signals in a last RACH attempt;

a feature corresponding to the RACH attempt changes;

a PRACH resource set determined in a single RACH attempt belongs to a different feature or feature combination than a PRACH resource set determined in a last RACH attempt;

a PRACH resource set selected in a single RACH attempt changes relative to a PRACH resource set selected in a last RACH attempt;

at least part of the PRACH signals in a last RACH attempt were not actually transmitted or were transmitted with reduced power;

an initial target received power determined in a single RACH attempt changes relative to an initial target received power determined in a last RACH attempt;

a synchronization signal and physical broadcast channel block (SSB) or a channel state information reference signal (CSI-RS) corresponding to a single RACH attempt changes relative to an SSB or CSI-RS corresponding to a last RACH attempt;

different PRACH signals within a single RACH attempt correspond to different SSBs or CSI-RSs; and

an SSB or CSI-RS corresponding to the first of the PRACH signals in a single RACH attempt changes relative to an SSB or CSI-RS corresponding to a final PRACH signal in a last RACH attempt.

20. The apparatus according to any one of claims 15 to 19, wherein the determination module is further configured to: initialize, based on a PRACH resource set selected in a current RACH attempt in a case that the PRACH resource set selected in the current RACH attempt changes relative to a PRACH resource set selected in a last RACH attempt, the first power control-related parameters, the first power control-related parameters comprising at least one of the following: an initial target received power, a power ramping step, and a value of a power ramping counter.

21. The apparatus according to claim 20, wherein initializing the first power control-related parameters comprises at least one of the following:

initializing the initial target received power to an initial target received power corresponding to the PRACH resource set selected in the current RACH attempt;

initializing the power ramping step to a power ramping step corresponding to the PRACH resource set selected in the current RACH attempt;

setting the value of the power ramping counter to zero or held without increment; and

adjusting the power ramping step to the power ramping step corresponding to the PRACH resource set selected in the current RACH attempt, and performing, based on the target received power used for one PRACH signal in the last RACH attempt or the total target received power used in the last RACH attempt and according to the power ramping step, power ramping.

22. The apparatus according to claim 21, wherein the determination module is further configured to perform at least one of:

introducing an additional power ramping counter configured to compensate for a difference between a current power ramping step and a last power ramping step; and

determining, based on the difference between the current power ramping step and the last power ramping step, a power offset for power compensation.

23. The apparatus according to any one of claims 15 to 22, wherein at least one of the following is satisfied:

PRACH resource sets corresponding to a first RACH attempt and a second RACH attempt are different;
features or feature combinations corresponding to the first RACH attempt and the second RACH attempt are different; and
PRACH resource sets corresponding to a third RACH attempt and a fourth RACH attempt support use between the third RACH attempt and the fourth RACH attempt,
the number of PRACH signals in the first RACH attempt and the second RACH attempt being not equal, and the number of PRACH signals in the third RACH attempt and the fourth RACH attempt being equal.

24. The apparatus according to claim 23, wherein the determination module is further configured to:
during a current RACH attempt, in a case that the number of RACH attempts reaches a first threshold, or the number of times the currently selected PRACH resource set is used reaches a second threshold, reselect a PRACH resource set in the next RACH attempt, and apply a usage number threshold corresponding to the reselected PRACH resource set.

25. The apparatus according to any one of claims 15 to 24, wherein the determination module is configured to determine, in a case that the PRACH resource set is configured with a first preamble resource set and a second preamble resource set and based on one of the following, the preamble resource set:

whether Msg3 is transmitted with repetitions; and
a measured path loss value and a threshold, the threshold being determined according to a predefined rule and based on a maximum transmit power, an initial target received power, and a correction value.

26. The apparatus according to claim 25, wherein the initial target received power referred to determine the preamble resource set comprises one of the following:

a total initial target received power corresponding to the current RACH attempt, or an initial target received power corresponding to one PRACH signal in a current RACH attempt;
a total initial target received power corresponding to an initial RACH attempt, or an initial target received power corresponding to one PRACH signal in the initial RACH attempt; and
an initial target received power corresponding to a fifth RACH attempt or a first PRACH signal, the fifth RACH attempt or the first PRACH signal being determined based on a configuration by a network-side device.

27. The apparatus according to any one of claims 15 to 26, wherein the determination module is further configured to determine, based on at least one of the following, an initial target received power referenced for a single Msg3 transmit power determination:

an initial target received power corresponding to a single RACH attempt;
an initial target received power corresponding to one PRACH signal in the RACH attempt; and
a target initial target received power determined based on a configuration by a network-side device.

28. The apparatus according to any one of claims 15 to 27, wherein the determination module is further configured to determine, based on at least one of the following, a power ramping accumulation referenced for Msg3 power determination:

a power ramping accumulation between a target received power of one PRACH signal in an initial RACH attempt and a target received power of one PRACH signal in a final RACH attempt;
a power ramping accumulation between a total target received power of the initial RACH attempt and a total target received power of the final RACH attempt; and
a power ramping accumulation between a sixth RACH attempt or a second PRACH signal, the sixth RACH attempt or the second PRACH signal being determined based on a configuration by a network-side device.

29. A terminal, comprising a processor and a memory storing programs or instructions executable by the processor, the

# EP 4 712 668 A1

programs or instructions, when executed by the processor, cause the processor to perform steps of the method according to any one of claims 1 to 14.

30. A readable storage medium having programs or instructions stored therein, the programs or instructions, when executed by a processor, cause the processor to perform steps of the method according to any one of claims 1 to 14.

FIG. 1

200

| Determine, by a terminal, parameters of PRACH transmission, the parameters including at least one of the following: transmission power of a single PRACH signal and a PRACH resource set | ∽ S202 |

| Transmit, based on the parameters, the PRACH signal, the PRACH transmission including a plurality of PRACH signals | ∽ S204 |

FIG. 2

FIG. 3

FIG. 4

FIG. 5

FIG. 6

EP 4 712 668 A1

FIG. 7

FIG. 8

Frequency

powerRampingStep

First RACH attempt | Second RACH attempt | Third RACH attempt

Time

PREAMBLE_POWER_RAMPING_COUNTER=1

PREAMBLE_POWER_RAMPING_COUNTER=1

PREAMBLE_POWER_RAMPING_COUNTER=2

## FIG. 9

Frequency

powerRampingStep

First RACH attempt | Second RACH attempt | Third RACH attempt

Time

PREAMBLE_POWER_RAMPING_COUNTER=1

PREAMBLE_POWER_RAMPING_COUNTER=1

PREAMBLE_POWER_RAMPING_COUNTER=2

## FIG. 10

Frequency

Time

Repetition number = 4     Repetition number = 8     Repetition number = 4

## FIG. 11

Frequency

**Preamble resources for CFRA, repetition number=4**

**Preamble resources for CBRA, repetition number=4**

FIG. 12

Frequency

Repetition number = 2          Repetition number = 8

FIG. 13

Apparatus 1400

Determination module ⌇ 1402

Transmission module ⌇ 1404

FIG. 14

1500

Communication device

1501 — Processor ⟷ Memory — 1502

## FIG. 15

1600

1601 — Radio frequency unit

Network module — 1602

1610 —

Memory
1609 — Application program
Operating system

Audio output unit — 1603

1604

Input unit
Graphics processing unit — 16041
Microphone — 16042

1608 — Interface unit

Processor

1607 —
User input unit
16071 — Touch panel
16072 — Other input devices

1606

Display unit
Display panel — 16061

Sensor — 1605

## FIG. 16

## INTERNATIONAL SEARCH REPORT

| International application No. |
| --- |
| **PCT/CN2024/091323** |

**A.    CLASSIFICATION OF SUBJECT MATTER**

H04W 74/08(2024.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT, ENTXTC, VEN, CNKI, 3GPP: 尝试, 传输, 单次, 单个, 一个, 一次, 多, 随机接入信道, 随机接入信号, 资源, 符号, 功率, 频率, 频域, 时域, 数量, 数目, 重传, 重发, 重复, attempt, multiple, once, power, PRACH, retransmission, retransmit, transmission, transmit, resource

**C.    DOCUMENTS CONSIDERED TO BE RELEVANT**

| Category* | Citation of document, with indication, where appropriate, of the relevant passages | Relevant to claim No. |
| --- | --- | --- |
| X | CN 107926034 A (TELEFONAKTIEBOLAGET LM ERICSSON (PUBL)) 17 April 2018 (2018-04-17)<br>description, paragraphs [0011]-[0205] | 1-30 |
| X | CN 108282898 A (HUAWEI TECHNOLOGIES CO., LTD.) 13 July 2018 (2018-07-13)<br>description, paragraphs [0004]-[0200] | 1-30 |
| X | CN 115211214 A (BEIJING XIAOMI MOBILE SOFTWARE CO., LTD.) 18 October 2022 (2022-10-18)<br>description, paragraphs [0004]-[0786] | 1-30 |
| A | KR 20210093624 A (SK TELECOM CO., LTD.) 28 July 2021 (2021-07-28)<br>entire document | 1-30 |
| A | FGI. "Discussion on CFRA for Multiple PRACH Transmission"<br>*3GPP TSG RAN WG1 Meeting #112Bis-E, R1-2303411*, 07 April 2023 (2023-04-07),<br>entire document | 1-30 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 July 2024** | **10 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 712 668 A1

**INTERNATIONAL SEARCH REPORT**
Information on patent family members

International application No.

**PCT/CN2024/091323**

| Patent document cited in search report | | | Publication date (day/month/year) | Patent family member(s) | | | Publication date (day/month/year) |
|---|---|---|---|---|---|---|---|
| CN | 107926034 | A | 17 April 2018 | KR | 20180039651 | A | 18 April 2018 |
| | | | | KR | 102056683 | B1 | 17 December 2019 |
| | | | | US | 2019191454 | A1 | 20 June 2019 |
| | | | | US | 10694541 | B2 | 23 June 2020 |
| | | | | CA | 2995677 | A1 | 23 February 2017 |
| | | | | CA | 2995677 | C | 03 January 2023 |
| | | | | EP | 3335503 | A1 | 20 June 2018 |
| | | | | US | 2018160448 | A1 | 07 June 2018 |
| | | | | US | 10194464 | B2 | 29 January 2019 |
| | | | | WO | 2017030485 | A1 | 23 February 2017 |
| CN | 108282898 | A | 13 July 2018 | CA | 3049497 | A1 | 12 July 2018 |
| | | | | CA | 3049497 | C | 19 March 2024 |
| | | | | US | 2019335511 | A1 | 31 October 2019 |
| | | | | US | 11129204 | B2 | 21 September 2021 |
| | | | | WO | 2018126879 | A1 | 12 July 2018 |
| | | | | EP | 3565316 | A1 | 06 November 2019 |
| | | | | EP | 3565316 | A4 | 18 December 2019 |
| | | | | EP | 3565316 | B1 | 28 July 2021 |
| | | | | JP | 2020505824 | A | 20 February 2020 |
| | | | | JP | 6934525 | B2 | 15 September 2021 |
| CN | 115211214 | A | 18 October 2022 | | None | | |
| KR | 20210093624 | A | 28 July 2021 | KR | 102385985 | B1 | 12 April 2022 |

Form PCT/ISA/210 (patent family annex) (July 2022)

**EP 4 712 668 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023105217146

33